# FASCICULE DE BREVET EUROPEEN

(11) **EP 0 704 696 B1**
(45) Date de publication et mention de la délivrance du brevet: **12.12.2001**
(21) Numéro de dépôt: 95420271.9
(22) Date de dépôt: 26.09.1995
(51) Int. Cl.: G01N 21/90

(54) **Procédé de détection pour le repérage de débris de verre à l'intérieur de bouteilles**
Verfahren zum Nachweis von Glassplittern im Innern von Flaschen
Method for detecting glass fragments in the interior of bottles

(30) Priorité: 30.09.1994 FR 9411921
(43) Date de publication de la demande: 03.04.1996
(73) Titulaire: VALENTIN THIERION, 51200 Epernay (FR)
(72) Inventeur: Collet, David, F-51100 Reims (FR); Danjoux, Raphael, F-51100 Reims (FR); Maillart, Christian, F-51140 Muizon (FR); Cardinali, Laurent, F-51100 Reims (FR)
(74) Mandataire: Myon, Gérard Jean-Pierre

(56) Documents cités:
- FR-A- 2 607 589
- US-A- 4 136 930
- US-A- 4 209 802
- PATENT ABSTRACTS OF JAPAN vol. 014 no. 040 (P-995) ,25 Janvier 1990 & JP-A-01 272948 (MITSUBISHI HEAVY IND LTD) 31 Octobre 1989,

## Description

La présente invention a trait à un procédé de détection de la présence de débris de verre présents dans une bouteille en verre déjà remplie d'un liquide.

La présence de débris de verre à l'intérieur d'une bouteille est due à l'ébréchage du goulot au moment du bouchage de ladite bouteille. On comprend aisément que des débris de verre contenus à l'intérieur d'une bouteille soient dangereux pour le consommateur.

Actuellement, la détection des débris de verre ou autres déchets contenus à l'intérieur d'une bouteille déjà remplie d'un liquide est réalisée par un employé posté devant la chaîne de convoyage et qui repère visuellement les débris. Ainsi, l'employé vérifie 5 000 bouteilles à l'heure et l'on comprend qu'il soit facile de commettre une erreur et de laisser passer une bouteille comprenant des débris de verre. En effet, l'employé est sujet très rapidement à des fatigues visuelles du fait du défilement successif et répétitif de plusieurs milliers de bouteilles.

JP-A-01 272948 décrit un procédé de détection d'une matière étrangère éventuellement présente en suspension dans une bouteille. A cet effet, on fait pivoter cette bouteille autour d'un axe horizontal, de manière à provoquer un léger déplacement de la matière en suspension, qui est alors détectée par une caméra.

On connaît également, par US-A-4,209,802, un procédé de détection de la présence de débris de verre dans un récipient. Selon ce procédé, on incline le récipient, une fois rempli, d'un angle environ 45°, de sorte que les éventuels débris de verre s'accumulent par gravité dans un coin du fond du récipient. Les débris ainsi accumulés sont repérés au moyen d'une caméra.

Ce procédé présente cependant un inconvénient, en ce sens qu'il n'assure pas une observation optimale des débris de verre ainsi accumulés.

L'invention se propose de remédier à cet inconvénient et vise à mettre en oeuvre un procédé qui permet une détection plus aisée et plus efficace des débris de verre.

A cet effet, elle a pour objet un procédé tel que défini dans la revendication 1 annexée.

En outre, la procédé de détection consiste en ce que postérieurement à l'opération d'inclinaison de chaque bouteille, celle-ci est agitée en vue de décoller les éventuels débris de la paroi interne.

Le dessin annexé, donné à titre d'exemple, permettra de mieux comprendre l'invention, les caractéristiques qu'elle présente et les avantages qu'elle est susceptible de procurer :

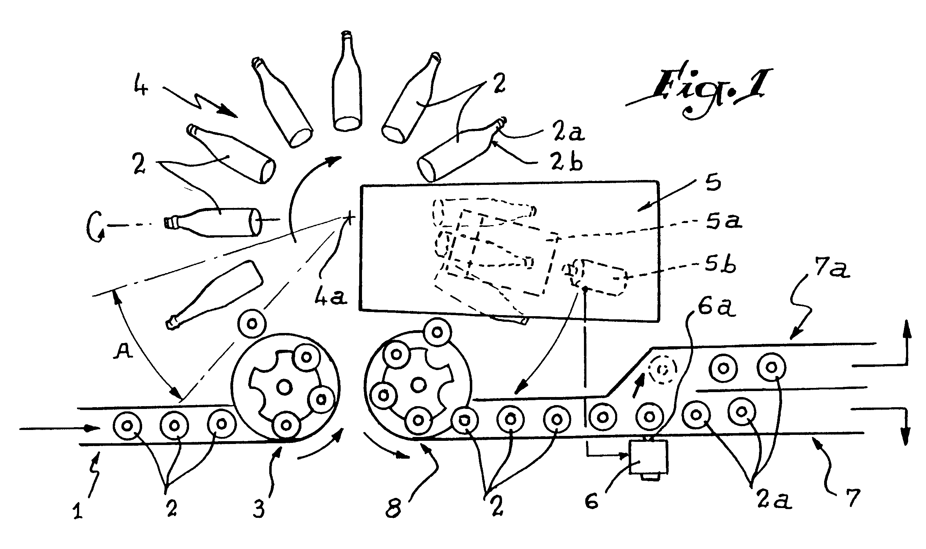

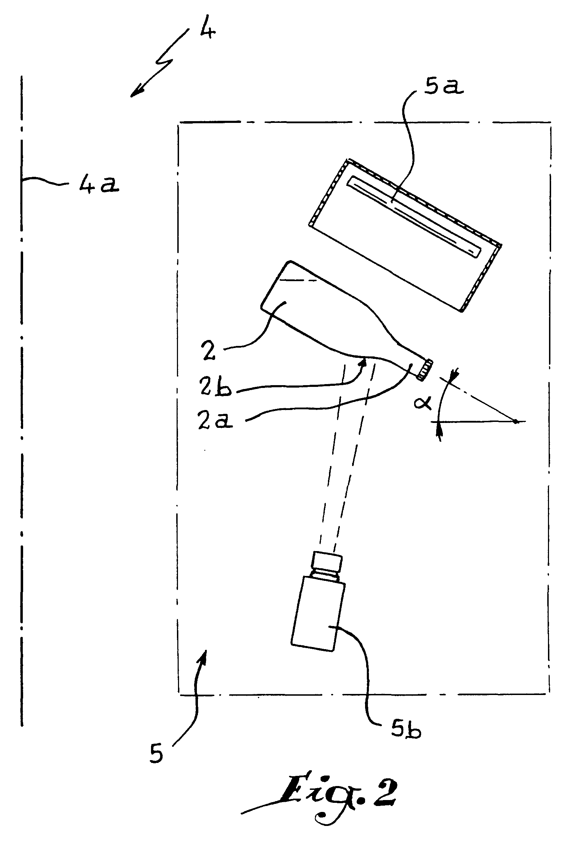

Fig. 1 et 2 sont des vues schématiques illustrant le dispositif pour la mise en oeuvre du procédé de détection suivant la présente invention.

On a représenté en fig. 1 une chaîne de convoyage 1 pour le transport de bouteilles en verre 2 sortant d'un groupe de remplissage-bouchage. La chaîne de convoyage 1 dépose les bouteilles 2 sur un élément rotatif 3 en forme d'étoile favorisant leur introduction successive dans une machine 4 permettant la mise en oeuvre du procédé.

La machine 4 tourne autour de son axe vertical 4a et comporte des moyens pour incliner chaque bouteille 2 dans une position de contrôle, c'est-à-dire avec son goulot 2a dirigé vers le bas. Dans notre exemple, l'inclinaison de chaque bouteille 2 est constante et elle est approximativement égale à un angle α de 30° par rapport l'horizontale. L'inclinaison de l'angle α doit être suffisante pour que l'épaulement 2b de chaque bouteille 2 soit placé de manière générale dans une position horizontale. En effet, le verre de l'épaulement 2b est plus fin et plus régulier, permettant ainsi une meilleure observation des éventuels débris. Les bouteilles 2 sont par exemple inclinées d'un angle α dans une zone A de la machine 4.

La machine 4 comporte des moyens pour entraîner en rotation brusque chaque bouteille 2 d'un demi-tour autour de son axe pour décoller de sa paroi interne les éventuels débris de verre.

Chacune des bouteilles 2 est ensuite maintenue pendant un temps déterminé, de l'ordre de 5 secondes, en position inclinée afin d'amener par gravité les éventuels débris de verre dans une zone répétitive de l'épaulement 2b de ladite bouteille 2. Cette zone représente une surface projetée de dimensions variables selon la taille des bouteilles 2 à vérifier. On constate que sur les bouteilles 2 testées, la surface projetée est inférieure à 10cm².

Enfin, chaque bouteille 2 est introduite en position inclinée, c'est-à-dire son goulot 2a dirigé vers le bas, dans une enceinte 5 qui est isolée des lumières parasites venant de l'extérieur. A l'intérieur de l'enceinte 5 est disposée au-dessus des bouteilles 2 une source lumineuse 5a, tandis qu'une caméra 5b permettant la détection des éventuels débris de verre est placée en dessous de la bouteille 2 à contrôler comme représenté en fig. 2.

Ainsi, la machine 4 présente de manière répétitive chaque bouteille 2 au-dessus de la caméra 5b, de manière que son objectif soit toujours dirigé en direction de l'épaulement 2b de la bouteille 2 à vérifier. La caméra 5b comporte des caractéristiques techniques suffisantes pour détecter les débris de verre contenus à l'intérieur de la bouteille 2 et plus particulièrement dans la zone répétitive constituée par la surface de l'épaulement 2b.

La caméra 5b transmet ensuite le résultat du contrôle à une unité de sélection 6 qui est reliée à un éjecteur de bouteilles 6a.

Après le contrôle par la caméra 5b, la machine 4 remonte les bouteilles 2 en position verticale, c'est-à-dire le goulot 2a dirigé vers le haut, pour que ces dernières soient ensuite placées sur une autre chaîne de convoyage 7 par l'intermédiaire d'un second élément rotatif 8 en forme d'étoile.

Sur la chaîne de convoyage 7 est disposée l'unité de sélection 6 munie de son éjecteur 6a pour déplacer les bouteilles 2 contenant un ou plusieurs débris de verre dans une goulotte 7a. Si les bouteilles 2 ne contiennent pas de débris, elles continuent leur cheminement sur la chaîne de convoyage 7 jusqu'au prochain groupe.

## Revendications

1. Procédé de détection de la présence de débris de verre présents dans une bouteille en verre déjà remplie d'un liquide, consistant à :
- incliner chacune des bouteilles (2) sortant du groupe de remplissage-bouchage en vue d'amener par gravité les éventuels débris dans une zone répétitive de ladite bouteille (2), ladite zone se trouvant dans le champ de l'objectif d'une caméra fixe (5b) ;
- transférer la donnée de la caméra (5b) à une unité de sélection (6) ;
- extraire de la chaîne de convoyage (7) les bouteilles (2) renfermant les débris de verre,
**caractérisé en ce qu'**on incline chaque bouteille (2) de manière que son goulot (2a) soit dirigé vers le bas, en vue d'amener par gravité les éventuels débris dans une zone répétitive de l'épaulement (2b) de ladite bouteille (2).

2. Procédé de détection suivant la revendication 1, **caractérisé en ce que** postérieurement à l'opération d'inclinaison de chaque bouteille (2), celle-ci est agitée en vue de décoller les éventuels débris de sa paroi interne.

3. Procédé suivant la revendication 1, **caractérisé en ce qu'**il consiste en outre en une rotation de la bouteille (2) autour de son axe longitudinal.

4. Procédé de détection suivant l'une quelconque des revendications précédentes, **caractérisé en ce que** l'angle d'inclinaison (α) de chaque bouteille (2) est déterminé de manière que l'épaulement (2b) soit placé dans un plan horizontal.

5. Procédé de détection suivant la revendication 1, **caractérisé en ce que** la zone répétitive de l'épaulement (2b) de la bouteille représente une surface projetée de dimensions variables selon la taille des bouteilles (2).

6. Procédé de détection suivant la revendication 5, **caractérisé en ce que** l'angle (α) d'inclinaison de chaque bouteille (2) est placé de manière générale dans une position horizontale.

## Patentansprüche

1. Verfahren zum Detektieren des Vorhandenseins von Glasresten, die in einer schon mit einer Flüssigkeit gefüllten Glasflasche vorhanden sind, bestehend im
- Neigen jeder der Flaschen (2), die die Gruppe Füllen-Verschließen verläßt, um die eventuellen Glasreste durch Schwerkraft in eine sich wiederholende Zone der Flasche (2) zu bringen, wobei die Zone sich in dem Objektivfeld einer feststehenden Kamera (5b) befindet;
- Übertragen der Daten der Kamera (5b) an eine Auswahleinheit (6);
- Herausholen der Flaschen (2) aus den Förderketten (7), die Glasreste einschließen;
**dadurch gekennzeichnet, daß** man jede Flasche (2) derart neigt, daß ihr Hals (2a) nach unten gerichtet ist, um durch Schwerkraft die eventuellen Reste in eine sich wiederholende Zone der Schulter (2b) der Flasche (2) zu bringen.

2. Verfahren zum Detektieren nach Anspruch 1, **dadurch gekennzeichnet, daß** nach dem Vorgang des Neigens jeder Flasche (2) diese bewegt wird, um die eventuellen Reste von ihrer Innenwand zu lösen.

3. Verfahren nach Anspruch 1, **dadurch gekennzeichnet, daß** es darüber hinaus in einer Drehung der Flasche (2) um ihre Längsachse besteht.

4. Verfahren zum Detektieren nach einem der vorhergehenden Ansprüche, **dadurch gekennzeichnet, daß** der Neigungswinkel (α) jeder Flasche (2) so bestimmt wird, daß die Schulter (2b) in einer horizontalen Ebene liegt.

5. Verfahren zum Detektieren nach Anspruch 1, **dadurch gekennzeichnet, daß** die sich wiederholende Zone der Schulter (2b) der Flasche eine projizierte Fläche mit unterschiedlichen Dimensionen entsprechend der Größe der Flaschen (2) ist.

6. Verfahren zum Detektieren nach Anspruch 5, **dadurch gekennzeichnet, daß** der Neigungswinkel (α) jeder Flasche in allgemeiner Art und Weise in einer horizontalen Position liegt.

## Claims

1. Method of detecting the presence of fragments of glass present in a glass bottle already filled with a liquid, consisting in:
- inclining each of the bottles (2) leaving the group being filled and sealed, with a view to bringing by gravity the possible fragments into a recurrent zone of the said bottle (2), said zone being located within the field of the lens of a fixed camera (5b);
- transferring the data from the camera (5b) to a selection unit (6);
- extracting from the conveying chain (7) the bottles (2) containing the glass fragments,
**characterised in that** each bottle (2) is inclined in such a way that its neck (2a) is directed downwards, with a view to bringing by gravity the possible fragments into a recurrent zone of the shoulder (2b) of the said bottle (2).

2. Detection method according to claim 1, **characterised in that,** subsequent to the operation of inclining each bottle (2), the latter is agitated with a view to freeing the possible fragments from its internal wall.

3. Method according to claim 1, **characterised in that** it consists furthermore in a rotation of the bottle (2) about its longitudinal axis.

4. Detection method according to any one of the preceding claims,
**characterised in that** the angle of inclination (α) of each bottle (2) is determined so that the shoulder (2b) is placed in a horizontal plane.

5. Detection method according to claim 1, **characterised in that** the recurrent zone of the shoulder (2b) of the bottle represents a projected surface of dimensions which can be varied according to the size of the bottles (2).

6. Detection method according to claim 5, **characterised in that** the angle (α) of inclination of each bottle (2) is generally placed in a horizontal position.
